# EUROPEAN PATENT APPLICATION

(11) **EP 3 291 095 A2**
(43) Date of publication of application: **07.03.2018**
(21) Application number: 17186638.7
(22) Date of filing: 17.08.2017
(51) Int. Cl.: G06F 11/30, G06F 11/34

(54) **PERFORMING STACK TRACE SAMPLING FOR METHOD INSTRUMENTATION**

(30) Priority: 31.08.2016 US 201615252615
(71) Applicant: Entit Software LLC, Sunnyvale, CA 94089 (US)
(72) Inventor: YEMINI, Nevoh, 56100 Yehud (IL); SELA, Roy, 56100 Yehud (IL); NITSAN, Amichai, 56100 Yehud (IL)
(74) Representative: HGF Limited

(57) **Abstract**

A method may include performing stack trace sampling to obtain a compiled list of transactions performed by a software application during a preconfigured timeframe, filtering the compiled list of transactions according to a set of filtering parameters to obtain a set of transactions instances that complies with the set of filtering parameters, and finding a set of non-instrumented methods within the set of transactions instances that complies with the set of filtering parameters. The set of non-instrumented methods may exceed a percentage threshold of a total transaction time of transactions that the set of non-instrumented methods are a part of and the percentage threshold may be user-configurable. The method may further include adding a set of instrumentation points into a points file, the set of instrumentation points associated with the set of non-instrumented methods.

## Description

### BACKGROUND

Instrumentation may refer to the ability to monitor or measure a level of application performance, to diagnose application errors, or to write trace information for application executions. Programmers may implement instrumentation in the form of code instructions that monitor specific components in a system (for example, instructions may output logging information to appear on screen). When an application contains instrumentation code, it can be managed using a management tool. Instrumentation may be used to review the performance of the application.

### BRIEF DESCRIPTION OF THE DRAWINGS

FIG. 1 shows a flowchart of an example process for instrumentation of methods with negative effect called by transactions instances according to an example of the present disclosure.
FIG. 2 shows a flowchart of an example process for instrumentation of methods with negative effect called by in transactions instances according to another example of the present disclosure.
FIG. 3 shows an example of a compiled list of transactions that exceed a latency threshold.
FIG. 4 shows an example of transaction instances with maximum latency within a selected timeframe.
FIG. 5 is a block diagram of an example computing device for instrumentation of methods with negative effect called by transactions instances according to an example of the present disclosure.
FIG. 6 is a block diagram of an example machine-readable storage medium including instructions to instrument methods with negative effect called by transactions instances according to an example of the present disclosure.

### DETAILED DESCRIPTION

Conventional out-of-the-box instrumentation tools may cover basic application libraries. This can create a problem for any user trying to monitor an application that uses custom code - this code may not be instrumented and therefore the user may not see the data that is deemed important, e.g., code sections critical to application functionality, causes of performance bottlenecks, etc.

For the above-mentioned scenarios, stack trace sampling can be useful in order to find methods of interest to be instrumented. When asynchronous thread sampling is enabled, the user may find non-instrumented methods added to a call profile graph by sampling. If the user elects to instrument these identified non-instrumented methods, accessing a points file manually or dynamically may be required in order to add new instrumentation points.

Examples consistent with the present disclosure may provide features to automatically find potential method candidates for instrumentation using stack trace sampling and dynamically adding of instrumentation points into a points file. Sampling of a stack trace is an approach to collecting data for profiling and monitoring, because it has a relatively smaller impact on performance and does not modify the observed application. When sampling stack traces, the samples can be merged into a calling context tree, which may show points in which the application spends increased amounts of time or where performance problems arise.

The features described herein can make use of stack trace sampling by applying a comparative analysis of sampled transactions instances. An analysis of the sampling may facilitate determination of particular application methods that appear in these transactions instances and may facilitate identification of particular application methods (or methods for short) that cause a negative effect. These particular application methods are likely candidates for instrumentation for dynamic addition of instrumentations points in the points file. A negative effect may refer to any effect that decreases application performance or impairs an intended functionality of the application. Negative effects may thus include inordinate CPU usage (e.g., beyond a specified time limit or percentage threshold), unbalanced resource consumption, and the like. As other examples, methods with a negative effect may include methods that may be the root cause for latency issues, based on the transactions they are part of and the effect they have on them. Thus, a method with a negative effect may refer to any method that includes, causes, exhibits, or otherwise correlates to a negative effect.

In an example according to the present disclosure, a method may be implemented by a computing device comprising a physical processor executing machine readable instructions. The method may comprise performing stack trace sampling to obtain a compiled list of transactions performed by a software application during a preconfigured timeframe, filtering the compiled list of transactions according to a set of filtering parameters to obtain a set of transactions instances that complies with the set of filtering parameters, and finding a set of non-instrumented methods within the set of transactions instances. The set of non-instrumented methods may exceed a percentage threshold of a total transaction time of transactions that the set of non-instrumented methods are a part of and the percentage threshold can be user-configurable. The method may further comprise adding a set of instrumentation points into a points file, the set of instrumentation points associated with the set of non-instrumented methods.

In another example according to the present disclosure, a computing device for instrumentation of methods called by transactions instances with negative effect may comprise a physical processor. The physical processor of the computing device may execute instructions on a machine-readable storage medium for instrumentation of methods. The physical processor may execute instructions to obtain a compiled list of transactions instances running in a software application during a timeframe by performing stack trace sampling, filter the compiled list of transactions instances by obtaining a set of transactions instances that exceeds a latency threshold within the timeframe and determine a set of non-instrumented methods from the filtered compiled list. In this respect, the set of non-instrumented methods may exceed a percentage threshold of the total transaction time of transactions that the non-instrumented methods are a part of. This percentage threshold can be user-configurable. Furthermore, the physical processor may execute instructions to add a set of instrumentation points into a points file, the set of instrumentation points can be associated with the set of non-instrumented methods.

In yet another example according to the present disclosure, a non-transitory machine-readable storage medium may be encoded with instructions to instrument methods called by transactions instances with negative effect. The non-transitory machine-readable storage medium may comprise instructions to perform stack trace sampling to select a compiled list of transactions running in a software application during a preconfigured timeframe, filter the compiled list of transactions instances by obtaining a set of latency instances that exceeds a predetermined static threshold preconfigured by a user and determine a set of non-instrumented methods from the filtered compiled list. In this respect, the set of non-instrumented methods may exceed a percentage threshold of the total transaction time of transactions that the non-instrumented methods are a part of and the percentage threshold can be user-configurable. Furthermore, the non-transitory machine-readable storage medium may comprise instructions to add a set of instrumentation points into a points file, the set of instrumentation points associated with the set of non-instrumented methods.

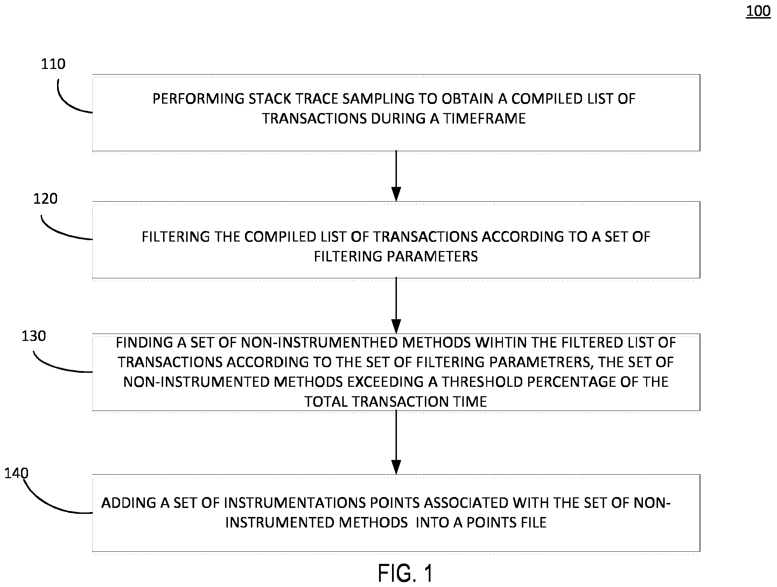

FIG. 1 shows a flowchart of an example process 100 for instrumentation of methods with negative effect called by transactions instances according to an example of the present disclosure. The process 100 can be performed or implemented by a computing device. The computing device may be, for example, a cloud server, a local area network server, a web server, a mainframe, a mobile computing device, a notebook or desktop computer, a smart TV, a point-of-sale device, a wearable device, any other suitable electronic device, or a combination of devices, such as ones connected by a cloud or internet network, that perform any of the functions described herein.

The process 100 comprises processing block 110 for performing stack trace sampling to obtain a compiled list of transactions performed by a software application during a preconfigured timeframe. The compiled list can be created by sampling the stack trace of a particular application during a preconfigured timeframe. Different lengths of timeframe can be selected by the user or by a computer program running in the computing device. This compiled list can give basic data about transactions instances and the methods comprised therein, such as class names, default name, layer, transaction names and packages, and more.

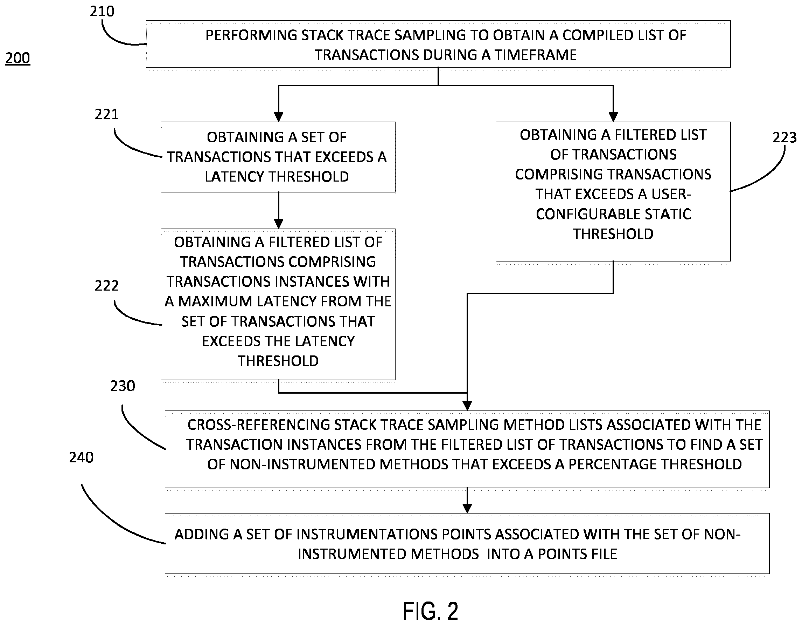

The process 100 shown in Figure 1 further comprises processing block 120 for filtering the compiled list of transactions according to a set of filtering parameters to obtain a set of transactions instances that complies with the set of filtering parameters. The set of filtering parameters may set any number of filtering criteria to identify specific transactions among the compiled list of transactions. For example, the set of filtering parameters may identify transactions that exceed a threshold latency, that consume a threshold amount of resources, that exhibit a particular negative effect (e.g., as defined according to thresholds or other criteria), or according to any other transaction characteristic. Other examples filtering parameters are discussed in greater detail below with respect to FIG. 2.

The process 100 also comprises processing block 130 for finding a set of non-instrumented methods within the set of transactions instances that complies with the set of filtering parameters. Methods called by transactions can identified through the stack trace sampling, e.g., at a configurable rate such as every 150 milliseconds. This sampling frequency can be configurable by the user or a computing program in order to spot methods called by the transaction instances. By performing stack trace sampling, an estimate of where a method starts and stops during execution of the transaction instances could be obtained (e.g., calculated using time stamps), providing basic data about these methods. Accordingly, through the stack trace sampling, determinations of latency or usage characteristics of application methods can be derived.

Continuing discussion of the process 100, in processing block 130, methods of interest for instrumentation may be found (e.g. they may be determined or identified). In particular, the methods of interest can be a set of non-instrumented methods within the set of transactions instances that complies with the set of filtering parameters. For example, the filtering parameters may result in determination of a set of non-instrumented methods that exceed a percentage threshold of a total transaction time for each transaction that the non-instrumented methods are called in. The total transaction time may refer to the time for execution of a particular transaction instance from the set of transactions obtained in processing block 120. As such, a set of non-instrumented methods can be found by crossing-referencing the stack trace sampling method lists being called by the transaction instances. This cross-reference between methods lists can comprise applying a percentage threshold of the total transaction time (i.e., the entire time for execution of the transaction) against the methods found after stack trace sampling.

To illustrate, the set of transaction instances may include multiple transactions and processing block 130 may include cross-referencing the method lists of each of the multiple transactions to determine if a particular method exceeds a percentage threshold of the total transaction time for each of (or a threshold number of) the multiple transactions being cross-referenced. As a particular illustration, processing block 130 may include determination that example method A exceeds 19% of the total transaction time of transaction instances 1, 2, and 3 of a set of transaction instances. Hence, in this particular illustration, method A can be a candidate for instrumentation included in the set of non-instrumented methods. Thus, a set of non-instrumented methods that exceeds the percentage threshold can be determined. The percentage threshold of the total transaction time can be user-configurable or determined by a computer program.

The process 100 further comprises processing block 140 for adding a set of instrumentation points into a points file, the set of instrumentation points can be associated with the set of non-instrumented methods previously found in processing block 130 after crossing-reference stack trace sampling method lists.

**Table 1**

| | |
|---|---|
| [Dynamic-Socket-Read] | |
| *; Socket read bytes instrumentation* | |
| keyword | = postcallcounter |
| counter | = socketBytesln |
| scope | = !java\.net\..* |
| class | = java.net.SocketInputStream |
| method | = socketRead0 |
| signature | = (Ljava/io/FileDescriptor;[BIII)I |

Table 1 shows an example of an instrumentation point that can be added into a points file. A points file can be a file that identifies specific points in code (e.g., instrumentation points), such as portions of specific methods to instrument during application execution. The points file may include hundreds of instrumentations points (or more) associated with a set of methods of interest for instrumentation and that may appear in many transaction instances, e.g., as identified in processing block 130 of the process 100. In the particular example of the instrumentation point shown in Table 1, the instrumentation point defines a specific package and class and a method with a signature. Hence, when this method "sockeRead0" is called during execution of a transaction instance, it can be instrumented and its container will be classified as a transaction.

FIG. 2 shows a flowchart of an example process 200 for instrumentation of methods with negative effect called by transactions instances according to another example of the present disclosure. The process 200 comprises block 210 for performing stack trace sampling to obtain a compiled list of transactions during a timeframe, e.g., similarly to processing block 110 of FIG. 1.

The filtering step performed in processing block 120 in FIG. 1 is split up in different blocks as it is shown in FIG. 2, as one particular example to illustrate through FIG. 2. In particular, the process 200 shows two different examples of filtering procedures to obtain a filtered list of transactions. The first example filtering procedure comprises processing blocks 221 and 222 and the second example filtering procedure comprises block 223.

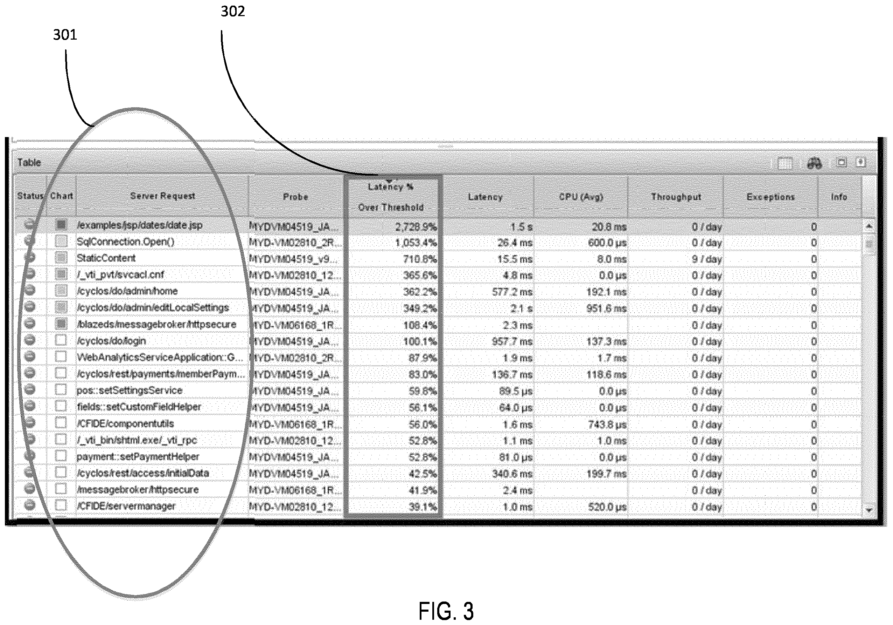

In processing block 221, a set of transactions that exceed a latency threshold during the selected timeframe is obtained. In some implementations, the latency against which the latency threshold is measured can be determined as the delay between a process instruction commanding the transaction and the execution of the transaction. Turning to FIG. 3 to illustrate, FIG. 3 shows an example of a compiled list of transactions that exceed a latency threshold. In particular FIG. 3 shows an obtained list of transactions 301 that exceed a pre-configured latency threshold within a selected time frame (also referred to as the list 301). The exceeded latency over the pre-configured threshold in percentage value is shown by reference 302. The latency threshold can be configured by the user or a computing program associated with the computing device. In particular, the list 301 in FIG.3 shows the list of transactions that exceeded the latency threshold within the selected timeframe. As it can be seen, there are several transactions that exceed the latency threshold. The top transaction from the list 301 can be analyzed in order to provide an example. Reference 301 shows, on top of the list, a transaction identified as /*examples*/*jsp*/*dates.jsp* that exceeded the latency threshold by a percentage value of 2,728.9% (and with an average latency of 1.5 seconds). Other example transactions are shown in the list 301. This list 301 can comprise transactions that may be dealing with methods with negative effect that may appear in several transactions instances or even many times in the same transaction.

Returning to FIG. 2, the process 200 includes the processing block 222 for obtaining a filtered list of transactions comprising transaction instances with a maximum latency from the set of transactions that exceeds the latency threshold. That is, for a particular transaction among the set of transactions that exceed the latency threshold (as obtained from processing block 221), processing block 222 may include identifying the specific instance of the particular transaction that has the greatest latency (e.g., within a configurable time period). To illustrate using the example from FIG. 3, in processing block 222, the instances of the transaction /*examples*/*jsp*/*dates.jsp* can be analyzed in order to find the transactions instance(s) of the /*examples*/*jsp*/*dates.jsp* transaction with a maximum latency (or with the highest latencies). This particular transaction /*examples*/*jsp*/*dates.jsp* may be analyzed as it exceeds the latency threshold by the greatest amount among the transactions of the list 301. Other transactions may be similarly analyzed as well.

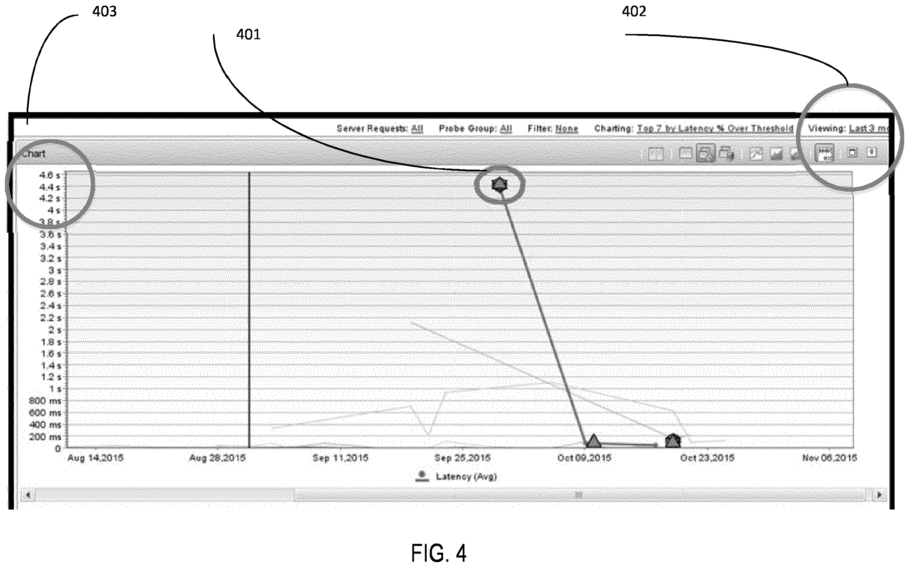

FIG. 4 can help illustrate such an analysis and shows an example of transaction instances with a maximum latency within a selected timeframe. In this respect, FIG. 4 shows a graph 400 displaying average latency of the transactions instances executed during a time viewing of three months according to reference 402 with respect to transaction /*examples*/*jsp*/*dates.jsp.* FIG. 4 shows instances of the transaction /*examples*/*jsp*/*dates.jsp* previously shown in the list 301 in FIG.3. Reference 401 shows that the particular transaction instance of the /*examples*/*jsp*/*dates.jsp* transaction with a maximum latency is the transaction instance of 4.4 seconds (as it can be seen in reference 403). Reference 402 in FIG. 4 shows that for this particular example according to the present disclosure, the time frame for selecting a compiled list of transactions lasted three months. Hence, in processing block 222 of FIG. 2, the particular transaction instance with a maximum latency of 4.4 seconds (and identified by the reference 401) can be selected, and subsequently used in processing block 230 to determine non-instrumented methods called by this transaction instance. As discussed below, this may be done by cross-referencing stack trace samplings of this transaction instance with other transaction instances from the filtered list obtained in processing block 222. Hence, in processing block 222 a list of filtered transaction instances having a maximum latency can be obtained. This filtered list that can comprise transaction instances as the example shown in FIG.4 and can be processed by processing block 230 in FIG. 2 in order find a set of methods for instrumentation. Similarly to the transaction /*examples*/*jsp*/*dates.jsp* from the list 301 of transactions shown in FIG.3, the remaining transactions from the list 301 shown in FIG.3 can be similarly analyzed (e.g., with a respective graph for each transaction similar to the graph 400 for the /*examples*/*jsp*/*dates.jsp* transaction).

In processing block 223, another example procedure to obtain a filtered list of transactions is shown. This alternative procedure may permit the user or a computing program associated with the computing device to select a configurable static threshold. Hence, responsive to some transactions exceeding this configurable static threshold, the filtered list of transactions can be obtained. In some examples, this configurable static threshold may be more restrictive than the latency threshold used in block 221. The more restrictive the threshold is, the greater the number of transactions can be selected to be part of the filtered list of transactions. This configurable static threshold may be a user's or administrator's choice. The static threshold may specify a baseline transaction latency (e.g., all transactions with a latency exceeding 5 seconds).

Hence, according to the example shown in FIG.2, two different procedures to obtain filtered list of transactions are shown. In other examples, different combinations of processing blocks 221, 222 and 223 could be used, e.g. combining processing block 223 previously to processing block 222 to find the transactions instances with maximum latency under the configurable static threshold or e.g. using only processing block 221 to obtain a set of transactions that can exceed the latency threshold as the only criterion to obtain the filtered list of transactions.

After obtaining the filtered list of transactions instances that can comprise transaction instances with maximum latency determined in processing block 222 or instances that exceeded the configurable static threshold applied in processing block 223, the methods appearing in the filtered set of transactions can be obtained in processing block 230 of FIG.2. In processing block 230, cross-referencing of the method lists of the filtered set of transactions previously obtained in processing blocks 222 or 223 can be performed. This cross-reference can be carried out in order to identify methods present in multiple of the filtered transactions. This cross-reference may apply a configurable percentage threshold of the total transaction time, i.e. the entire time for execution of the transaction in order to select suitable methods for instrumentation.

Hence, in processing block 230, the non-instrumented methods of interest (e.g., methods with negative effect) can be found as a result of performing a cross-reference of the methods lists from the filtered set of transactions. These methods of interest may be shared by part or by all of the transaction instances from the filtered list of transactions. That is, a particular non-instrumented method may be included in the set of non-instrumented methods when the particular non-instrumented method is present in more than a percentage threshold of the transaction instances in the set of filtered transactions as shown below.

These methods may be of interest because they may take up a significant percentage of the entire transaction time, e.g., these methods may exceed a percentage threshold of a total or entire transaction time of the transactions in which the non-instrumented methods are a part of. Some or all of these non-instrumented methods may appear in all (e.g., 100%) of the transactions instances comprised in the filtered list of transactions, hence, being the same for all the transactions instances comprised in the list. That is, a particular non-instrumented method may be present in each transaction instance of the filtered list of transactions, upon which the particular non-instrumented method may be included in the set of non-instrumented methods determined for the block 230. In another example according to the present disclosure, the non-instrumented methods that exceed a percentage threshold of the total transaction time may appear in 50% (or any other configurable threshold) of the transaction instances from the list in order to be included in the set of non-instrumented methods.

The detectability of these methods for instrumentations is improved with the increase of the percentage of appearance of these methods in the transactions instances. Hence, if a method meets or exceeds the pre-configured percentage of the entire transaction time and appears in the 100% of transaction instances from the list of filtered transactions (or any other configurable percentage threshold), this method can be a potential candidate for instrumentation.

Hence, having transactions that may come from different paths that exceeded the pre-configured latency threshold within the selected timeframe in block 222, this set of transaction instances may share the same un-instrumented method called in every transaction instance (or a threshold number or percentage of transaction instances). This un-instrumented method called in every transaction instance may take up a significant percentage of the entire transaction time, i.e., this un-instrumented method may have been called in every transaction instance from the set and may have exceeded a percentage threshold of the total transaction time. In this respect, the instrumentation features described herein may determine this particular method as suspicious or of interest for exhibiting this behavior in all the transaction instances in which the method may appear. Thus, the features described herein may support identification of this un-instrumented method as a candidate for investigation in processing block 230 and give an idea as to where to start looking for issues. Possibly, this method of interest may be instrumented in processing block 230.

Examples of transaction counts for applications may be in the hundreds or even thousands of transactions instances (and even more), including those in the filtered lists obtained in blocks 222 and 223. In this respect, the described procedure to find non-instrumented methods can be performed by the computing device described in the present disclosure by performing the aforementioned blocks from the processes 100 and 200 for a significantly larger amount of transactions, e.g. the computing device may perform instructions to aggregate to the list of filtered transactions instances all the transaction falling within the selected timeframe that have a maximum latency as shown in block 222 or the ones that exceed the configurable static threshold in block 223.

In order to find the methods of interest, a percentage threshold of the total transaction time can be set by the user or a computing program. In an example illustration, this percentage threshold can be 15% and a filtered list obtained in processing block 222 comprises two transaction instances in this example illustration. Cross referencing of the stack trace sampling method list of both transactions instances in block 230 may identify a method "A" that appears in the first transaction instance taking 19.8% of the total transaction time and in the second transaction instance taking 20.1% of the total transaction time. Hence, method "A" being called in both transaction instances, i.e., being called in 100% of the transaction instances of the filtered list, may be determined as a method of interest for instrumentation in processing block 230 for this example illustration.

In processing block 240, the methods of interest for instrumentation obtained in processing block 230 (e.g., the methods that exceeded the percentage threshold of the entire or total transaction time for each of the transaction instances) can be instrumented. Instrumentation of the methods of interest can be performed by adding an instrumentation point for each method of interest into the points file, as described in FIG. 1 for example.

Hence, once the interesting methods for instrumentation are found, they can be instrumented in processing block 240 by adding an instrumentation point for each of the methods planted into the points file automatically. Once the instrumentation points are written to the points file, there is no need to restart execution of the application and next transactions instances can be instrumented. Hence, the features described herein may provide increased information regarding transactions performance and possible investigation routes. The next time an instrumented method can be called during application execution, instrumentation will return instrumentation data.

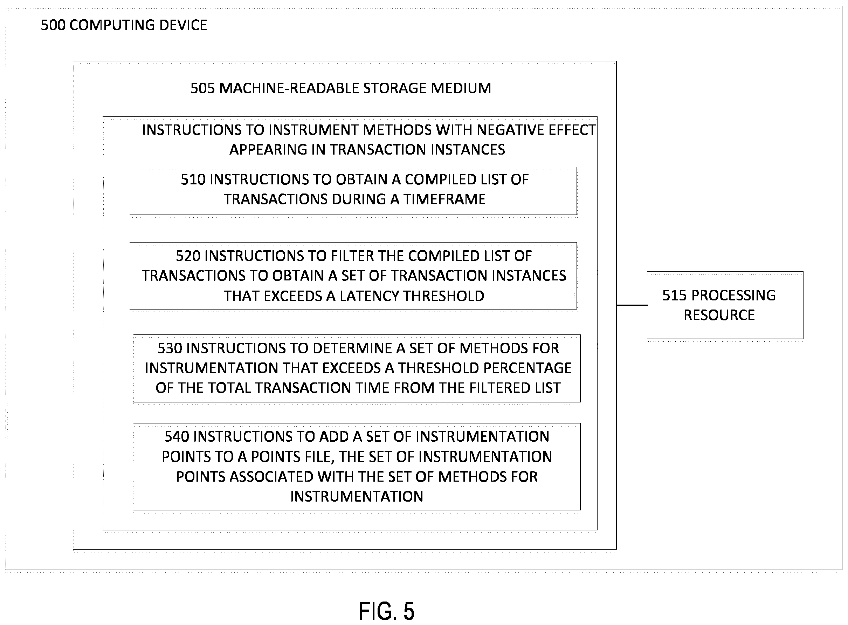

FIG. 5 shows an example of a computing device 500 for instrumentation of methods with negative effect being called by transactions instances according to an example of the present disclosure. The computing device 500 may be, for example, a cloud server, a local area network server, a web server, a mainframe, a mobile computing device, a notebook or desktop computer, a smart TV, a point-of-sale device, a wearable device, any other suitable electronic device, or a combination of devices, such as ones connected by a cloud or internet network, that perform any of the functions described herein. In the example shown in FIG. 5, computing device 500 includes a processing resource 515 and a non-transitory machine-readable storage medium 505 encoded with instructions to instrument methods called by transactions instances with negative effect.

The processing resource 515 may be one or more central processing units (CPUs), semiconductor-based microprocessors, and/or other hardware devices suitable for retrieval and execution of instructions stored in a machine-readable storage medium 505. The processing resource 515 may fetch, decode, and execute instructions 510, 520, 530, 540 and/or other instructions to implement the procedures described herein. As an alternative or in addition to retrieving and executing instructions, the processing resource 515 may include one or more electronic circuits that include electronic components for performing the functionality of one or more of instructions 510, 520, 530 and 540.

In an example, instructions 510, 520, 530, 540 and/or other instructions can be part of an installation package that can be executed by the processing resource 515 to implement the functionality described herein. In such a case, the machine-readable storage medium 505 may be a portable medium such as a CD, DVD, or flash drive or a memory maintained by a computing device from which the installation package can be downloaded and installed. In another example, the program instructions may be part of an application or applications already installed on the computing device 500.

The machine-readable storage medium 505 may be any electronic, magnetic, optical, or other physical storage device that contains or stores executable data accessible to the computing device 500. Thus, the machine-readable storage medium 505 may be, for example, a Random Access Memory (RAM), an Electrically Erasable Programmable Read-Only Memory (EEPROM), a storage device, an optical disc, and the like. The machine-readable storage medium 505 may be a non-transitory storage medium, where the term "non-transitory" does not encompass transitory propagating signals. The machine-readable storage medium 505 may be located in the computing device 500 and/or in another device in communication with the computing device 500.

As described in detail below, the machine-readable storage medium 505 may be encoded with instructions to instrument methods with negative effect called by transaction instances. In particular, it may comprise instructions 510 to obtain a compiled list of transactions during a timeframe. The timeframe can be configurable by the user or a computing program running in the system. As shown in FIG.4, the timeframe for obtaining the compiled list of transactions comprised several months. The machine-readable storage medium 505 further comprises instructions 520 to filter the compiled list of transactions to obtain a set of transactions instances that exceeds a latency threshold. A set of filtering parameters may set any number of filtering criteria to identify specific transactions among the compiled list of transactions. For example, the set of filtering parameters may identify transactions that exceed a threshold latency, that consume a threshold amount of resources, that exhibit a particular negative effect (e.g., as defined according to thresholds or other criteria), or according to any other transaction characteristic.

Furthermore, the machine-readable storage medium 505 further comprises instructions 530 to determine a set of methods for instrumentation that exceed a percentage threshold of the total transaction time of transactions that the non-instrumented methods are a part of. Methods called by transactions can be identified through the stack trace sampling, e.g., at a configurable rate such as every 150 milliseconds. This set of methods for instrumentation that exceed the percentage threshold can be found by crossing-referencing the stack trace sampling method lists appearing in the transaction instances. This cross-reference between methods lists can comprise applying the percentage threshold of the total transaction time (i.e. the entire time for execution of the transaction) against the methods found after stack trace sampling.

Furthermore, the machine-readable storage medium 505 further comprises instructions 540 to add a set of instrumentation points to a points file, the set of instrumentation points associated with the set of methods for instrumentation previously determined in instructions 530. The set of instrumentation points can be associated with the set of methods for instrumentation previously determined by executing instructions 530 after crossing-reference stack trace sampling method lists.

The machine-readable storage medium 505 may further be encoded with instructions to filter the compiled list of transactions by selecting a plurality of maximum latency transaction instances from the set of transaction instances that exceeds the latency threshold. The maximum latency transaction instances can have the highest latencies of all the transactions instances.

The machine-readable storage medium 505 may further be encoded with instructions to filter the compiled list of transactions by selecting all transactions that exceeded a predetermined static threshold. In one example, the predetermined static threshold can be more restrictive that the latency threshold. Hence, responsive to some transactions exceeding this predetermined static threshold, the filtered list of transactions can be obtained. The static threshold may specify a baseline transaction latency (e.g., all transactions with a latency exceeding 5 seconds).

The predetermined static threshold can be determined by the user or a computing program running in the computing device. The set of non-instrumented methods that exceeds the percentage threshold of the total transaction time can appear in e.g. 75% of the transactions instances from the filtered compiled list. In another examples, the set of non-instrumented methods that exceeds the percentage threshold of the total transaction time can appear in e.g. 100% of the transactions instances from the filtered compiled list. Different rates of appearance for methods exceeding the percentage threshold of the total transaction time can be considered.

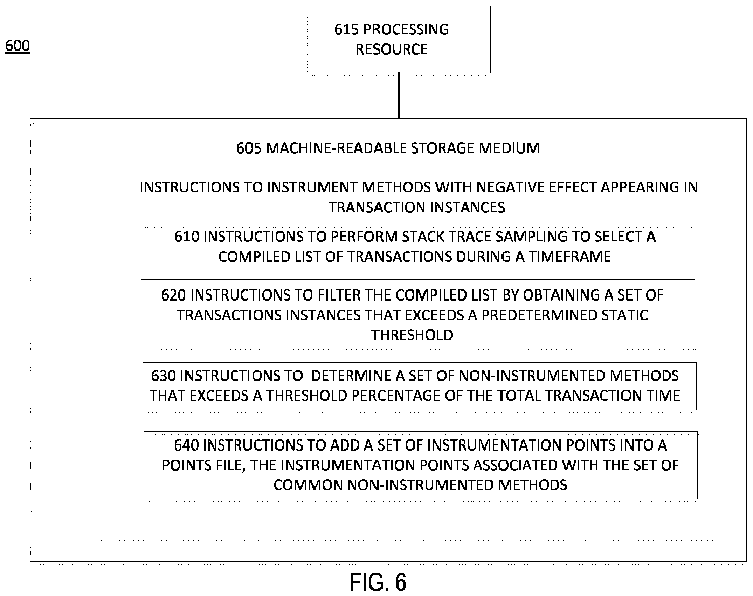

FIG. 6 shows a block diagram 600 of an example of a machine-readable storage medium 605 according to an example of the present disclosure for instrumentation of methods with negative effect called by transactions instances. The storage medium 605 can include instructions executable by a processing resource 615. In particular, the storage medium 605 can comprise instructions to instrument methods with negative effect called by transaction instances. The storage medium 605 can comprise instructions 610 to perform stack trace sampling to select a compiled list of transactions during a timeframe. Instructions 610 can execute processing block 110 in FIG.1 and processing block 210 in FIG.2. The compiled list can be created by sampling the stack trace of a particular application during a preconfigured timeframe. Different lengths of timeframe can be selected by the user or by a computer program running in the computing device. This compiled list can give basic data about transactions instances and the methods comprised therein.

Furthermore, the storage medium 605 can comprise instructions 620 to filter the compiled list by obtaining a set of transactions instances that exceeds a predetermined static threshold. Hence, responsive to some transactions exceeding this configurable static threshold, the filtered list of transactions can be obtained. The more restrictive the threshold is, the greater the number of transactions can be selected to be part of the filtered list of transactions. This configurable static threshold may be a user's or administrator's choice. The static threshold may specify a baseline transaction latency (e.g., all transactions with a latency exceeding 5 seconds). Instructions 620 can execute processing block 120 in FIG.1 and processing block 223 in FIG.2.

The storage medium 605 can comprise instructions 630 to determine a set of non-instrumented methods that exceeds a percentage threshold of the total transaction time. Methods called by transactions can be identified through the stack trace sampling, e.g., at a configurable rate such as every 150 milliseconds. The set of non-instrumented methods that exceed a percentage threshold of a total transaction time can be determined by performing a cross-reference between methods lists and applying the percentage threshold of the total transaction time (i.e. the entire time for execution of the transaction). The total transaction time may refer to the time for execution of a transaction instance from the set of transactions obtained in instructions 620. These instructions can execute processing blocks 130 in FIG.1 and 230 in FIG.2.

Instructions 630 can execute processing blocks 130 in FIG.1 and processing block 230 in FIG. 2. The non-instrumented methods that exceeds the percentage threshold of the total transaction time may appear in 75% or 100% of the transactions instances from the filtered compiled list.

The storage medium can comprise instructions 640 to add a set of instrumentation points into a points file, the instrumentation points can be associated with the set of non-instrumented methods previously obtained after crossing-reference stack trace sampling method lists associated with the filtered compiled list of transactions. Instructions 640 can execute processing block 140 in FIG.1 and processing block 240 in FIG.2.

The machine-readable storage medium 600 can further comprise instructions to filter the compiled list of transactions by obtaining a set of transaction instances that exceeds a latency threshold within the timeframe. In some implementations, the latency against which the latency threshold is measured can be determined as the delay between a process instruction commanding the transaction and the execution of the transaction. These instructions can execute processing block 221 in FIG. 2. In some examples, the filtered compiled list using the latency threshold can be greater than the filtered compiled list using the predetermined static threshold. The latency threshold can be configured by the user or a computing program associated with the computing device.

The machine-readable storage medium 600 can further comprise instructions to filter the compiled list of transactions by selecting a plurality of maximum latency transaction instances (or instances with the highest latency) from the set of transactions that exceeds the latency threshold. These instructions can execute processing block 222 in FIG. 2.

Hence, the proposed solution described herein can pinpoint several methods of interest and instrumented them, while adding minimum overhead. Thus present solution can be efficiently time-wise, since the computing system and method performing the proposed solution can do the active search of methods for instrumentation being most of the process automated.

The sequence of operations described in connection with FIGS. 1 to 6 are examples and are not intended to be limiting. Additional or fewer operations or combinations of operations may be used or may vary without departing from the scope of the disclosed examples. Furthermore, implementations consistent with the disclosed examples may not perform the sequence of operations or instructions in any particular order. Thus, the present disclosure merely sets forth possible examples of implementations, and many variations and modifications may be made to the described examples. All such modifications and variations are intended to be included within the scope of this disclosure and protected by the following claims.

Implementations can be realized according to the following examples:
Example 1. A non-transitory machine-readable storage medium, encoded with machine-readable instructions executable by a physical processor that cause a computing device to: perform stack trace sampling to select a compiled list of transactions running in a software application during a preconfigured timeframe; filter the compiled list of transactions by obtaining a set of transaction instances that exceeds a predetermined static threshold preconfigured by a user; determine a set of non-instrumented methods from the filtered compiled list, wherein the set of non-instrumented methods exceeds a percentage threshold of the total transaction time of transactions that the non-instrumented methods are a part of, wherein the percentage threshold is user-configurable; and add a set of instrumentation points into a points file, the set of instrumentation points associated with the set of non-instrumented methods.
Example 2. The non-transitory machine-readable storage medium of example 1, wherein the physical processor further executes machine-readable instructions that cause the physical processor to: filter the compiled list of transactions by obtaining a set of transaction instances that exceeds a latency threshold within the timeframe, wherein the filtered compiled list using the latency threshold is greater than the filtered compiled list using the predetermined static threshold.
Example 3. The non-transitory machine-readable storage medium of example 2, wherein the physical processor further executes machine-readable instructions that cause the physical processor to: filter the compiled list of transactions by selecting a plurality of maximum latency transaction instances from the set of transactions that exceeds the latency threshold.
Example 4. The non-transitory machine-readable storage medium of example 3, wherein the physical processor further executes machine-readable instructions that cause the physical processor to: determine the set of non-instrumented methods from the plurality of maximum latency transaction instances from the set of transaction that exceeds the latency threshold.
Example 5. The non-transitory machine-readable storage medium of any of examples 1 to 4, wherein the predetermined static threshold and the preconfigured timeframe are determined by a computing program running in the system.
Example 6. The non-transitory machine-readable storage medium of any of examples 1 to 5, wherein the physical processor further executes machine-readable instructions that cause the physical processor to:
   determine the set of non-instrumented methods from the filtered compiled list by crossing-reference stack trace sampling method lists associated with each of the transaction instances from the set.

## Claims

1. A method performed by a computing device, the method comprising:
performing stack trace sampling to obtain a compiled list of transactions performed by a software application during a preconfigured timeframe;
filtering the compiled list of transactions according to a set of filtering parameters to obtain a set of transactions instances that complies with the set of filtering parameters;
finding a set of non-instrumented methods within the set of transactions instances that complies with the set of filtering parameters;
wherein the set of non-instrumented methods exceeds a percentage threshold of a total transaction time of transactions that the set of non-instrumented methods are a part of,
wherein the percentage threshold is user-configurable; and
adding a set of instrumentation points into a points file, the set of instrumentation points associated with the set of non-instrumented methods.

2. The method of claim 1, wherein the set of filtering parameters are configurable by a user or a computing program.

3. The method of claim 1 or 2, wherein filtering the compiled list of transactions comprises obtaining a set of transaction instances that exceeds a latency threshold.

4. The method of claim 3, wherein filtering the compiled list of transactions further comprises selecting a plurality of maximum latency transaction instances from the set of transaction instances that exceeds the latency threshold.

5. The method of any preceding claim, wherein filtering the compiled list of transactions comprises obtaining a set of transaction instances that exceeds a predetermined user-configurable static threshold.

6. The method of any preceding claim, wherein the set of non-instrumented methods that exceeds the percentage threshold of the total transaction time is comprised within the 100% of the transactions instances that complies with the set of filtering parameters.

7. The method of any preceding claim, finding a set of non-instrumented methods within the set of transactions instances comprises crossing-reference stack trace sampling method lists associated with each of the transaction instances from the set.

8. The method of any preceding claim, wherein the preconfigured timeframe is configurable by the user or a computing program within the system.

9. A computing device comprising:
a physical processor that executes machine readable instructions that cause the system to:
obtain a compiled list of transactions running in a software application during a timeframe by performing stack trace sampling;
filter the compiled list of transactions by obtaining a set of transactions instances that exceeds a latency threshold within the timeframe;
determine a set of non-instrumented methods from the filtered compiled list,
wherein the set of non-instrumented methods exceeds a percentage threshold of the total transaction time of transactions that the non-instrumented methods are a part of,
wherein the percentage threshold is user-configurable; and
add a set of instrumentation points into a points file, the set of instrumentation points associated with the set of non-instrumented methods.

10. The computing device of claim 9, wherein the physical processor executes machine readable instructions that cause the system to:
filter the compiled list of transactions by selecting a plurality of maximum latency transaction instances from the set of transaction instances that exceeds the latency threshold.

11. The computing device of claim 9 or 10, the physical processor executes machine readable instructions that cause the system to:
filter the compiled list of transactions by selecting all transactions that exceeded a predetermined static threshold,
wherein the predetermined static threshold is more restrictive that the latency threshold.

12. The computing device of claim 11, wherein the predetermined static threshold and the preconfigured timeframe are determined by the user or a computing program running in the computing device.

13. The computing device of any of claims 9 to 12, wherein the set of non-instrumented methods that exceeds the percentage threshold of the total transaction time is comprised within the 50% of the transactions instances from the filtered compiled list.

14. The computing device of any of claims 9 to 13, wherein the machine readable instructions that cause the system to determine a set of non-instrumented methods from the filtered compiled list further comprises machine readable instructions that cause the system to:
cross-reference stack trace sampling method lists associated with each of the transaction instances from the set.

15. A non-transitory machine-readable storage medium, encoded with machine-readable instructions executable by a physical processor that cause a computing device to implement the method of any of claims 1 to 8.
